# FASCICULE DE BREVET EUROPEEN

(11) **EP 0 571 287 B1**
(45) Date de publication et mention de la délivrance du brevet: **16.07.1997**
(21) Numéro de dépôt: 93401298.0
(22) Date de dépôt: 19.05.1993
(51) Int. Cl.: C03B 23/025, C03B 27/044, C03B 27/052, C03B 23/033

(54) **Procédé et dispositif d'obtention de feuilles de verre bombées**
Verfahren und Vorrichtung zum Herstellen von gebogenen Glasscheiben
Method and apparatus for bending glass sheets

(30) Priorité: 21.05.1992 FR 9206171
(43) Date de publication de la demande: 24.11.1993
(73) Titulaire: SAINT-GOBAIN VITRAGE, 92400 Courbevoie (FR)
(72) Inventeur: Letemps, Bernard, F-60150 Thourotte (FR); Leclercq, Jacques, F-80240 Roisel (FR)
(74) Mandataire: Menes, Catherine

(56) Documents cités:
- EP-A- 0 263 030
- BE-A- 366 467
- FR-A- 2 442 219
- FR-A- 2 549 465

## Description

L'invention a trait aux techniques de bombage de feuilles de verre par défilement sur un lit de conformation constitué par une série de tiges conformatrices disposées selon un trajet à profil courbe dans la direction de défilement des feuilles de verre. L'invention s'applique plus particulièrement à la production de vitrages automobiles bombés et éventuellement trempés.

La technique ci-dessus évoquée est connue notamment des brevets français FR-B-2 442 219 et FR-B-2 549 465 et consiste à faire défiler des feuilles de verre, réchauffées dans un four horizontal, entre deux nappes de rouleaux - ou autres éléments tournants - disposés selon un profil curviligne, et passant au travers d'une zone terminale de trempe. Pour la production de vitres latérales, toits ouvrants ou autres vitrages de forme cylindrique, les nappes sont constituées en régle générale par des tiges cylindriques droites disposées selon un profil circulaire. Cette technique permet une capacité de production très élevée car d'une part, les feuilles de verre n'ont pas à être largement espacées, une feuille de verre pouvant sans problème entrer dans la zone de formage alors que le traitement de la feuille précédente n'est pas achevé et d'autre part, si la longueur des rouleaux le permet, deux ou trois feuilles de verre peuvent être traitées simultanément de front.

La plupart du temps, les vitrages automobiles comportent des parties émaillées en face intérieure, c'est-à-dire sur la face concave ; cet émail est déposé d'office sur la face des feuilles de verre tournées vers le haut dans le four afin de ne pas souiller le convoyeur du four et, indirectement, les autres feuilles de verre. Par conséquent, la trajectoire des feuilles de verre doit être ascendante et le lit de conformation présente une concavité tournée vers le haut. Dans ces conditions, la feuille de verre "grimpe" d'une marche pour chaque rouleau du lit de conformation.

Pour aider le verre à monter cette marche, il a été proposé dans le brevet FR-B-2 549 465 d'utiliser un ensemble de rouleaux supérieurs doublant le lit de conformation. Ces rouleaux supérieurs sont montés avec des ressorts pour éviter d'appuyer trop fortement sur le verre, le but étant de procurer simplement une aide à l'avancement et en aucun cas un effet de laminage ou de pressage. Néanmoins, ceci n'est possible que si les rouleaux supérieurs sont parfaitement bien réglés en position ce qui suppose une machine assez complexe. Dans le brevet EP-B-263 030 il a par ailleurs été montré que ces rouleaux supérieurs peuvent être supprimés si la vitesse de défilement des plaques de verre est élevée, plus exactement au moins égale à 10 cm/seconde et de préférence de l'ordre de 15 à 18 cm/seconde.

En augmentant la vitesse de défilement, on raccourcit la période de temps pendant laquelle un point donné de la feuille de verre n'est pas soutenu car se trouvant alors entre deux rouleaux. De ce fait, on réduit le risque de créer des défauts optiques et de galbes dus à la formation de vaguelettes. Tout se passe comme si les rouleaux ou autres éléments tournants équivalents étaient plus rapprochés, ce rapprochement physique des rouleaux n'étant pas permis essentiellement par des limites technologiques dues notamment à l'encombrement des pignons et autres mécanismes de transmission du mouvement en rotation et au diamètre minimum à respecter pour éviter toute déformation des rouleaux.

La vitesse de défilement préférée, de l'ordre de 15 à 18 cm/seconde, permet encore un bon contact entre le verre et les rouleaux, en limitant les risques de glissement du verre par rapport aux rouleaux.

L'augmentation de la vitesse de défilement des feuilles de verre est par ailleurs limitée par un second facteur critique. En effet, si une augmentation des cadences est une bonne chose en soi, il ne faut pas pour autant que le vitrage ressorte de la machine de bombage/trempe sans être correctement trempé. Or comme indiqué précédemment, dans ce type de technique de bombage/trempe, la trempe est réalisée au défilé, avec des feuilles de verre déplacées à la même vitesse que dans la zone de bombage. Dans des conditions de soufflage données, le temps de trempe est donc directement la résultante de la vitesse de défilement de la feuille de verre, de la longueur de la zone de trempe et de la température du verre à son entrée dans la zone de trempe.

Travailler avec un verre plus chaud en zone de trempe implique à l'évidence un verre plus chaud en zone de bombage avec alors une accentuation des phénomènes de déformations sous forme de vaguelettes évoqués plus haut. Par ailleurs, la longueur disponible pour la zone de trempe est, du moins dans ce type d'installation, d'autant plus courte que le rayon de courbure à conférer à la feuille de verre est petit, l'évacuation de la feuille de verre hors de la machine de bombage/trempe devant être réalisée au plus tard après que les feuilles de verre aient parcouru un quart de tour donc avant qu'elles ne reviennent en arrière. Pour un rayon de courbure de 1 mètre, sachant que la longueur de la zone de bombage doit être de l'ordre de 30 centimètres, il reste tout au plus une longueur d'environ 1,25 m.

Dans des conditions de soufflage relativement standards et pour une feuille de verre de 3,2 mm d'épaisseur, devant respecter les prescriptions du règlement européen No. 43 relatif à l'homologation du vitrage de sécurité et des matériaux pour vitrages destinés à être montés sur les véhicules à moteur et leurs remorques. Selon ces prescriptions, les contraintes de trempe doivent être telles que le vitrage présente, en cas de bris, un nombre de fragments qui dans tout carré de 5 x 5 cm, est ni inférieur à 40 ni supérieur à 350 (nombre porté à 400 pour des vitrages d'une épaisseur inférieure ou égale à 2,5 mm. Toujours selon ces prescriptions, aucun des fragments ne doit être de plus de 3,5 cm², sauf éventuellement dans une bande de 2 cm de large à la périphérie du vitrage et dans un rayon de 7,5 cm autour du point d'impact et aucun fragment allongé de plus de 7,5 cm ne doit exister.

La zone de trempe de la machine de bombage doit, dans ce but être parcourue pendant une durée d'au moins 5 secondes ce qui conduit à calculer une vitesse limite de défilement des feuilles de verre égale à 25 cm/seconde.

Par rapport à la vitesse préférée de défilement indiquée plus haut, ceci donne a priori une confortable marge de manoeuvre et ce point est effectivement respecter pour les vitrages rectangulaires ou essentiellement rectangulaires pour lesquels la distance maximum entre deux points non supportés par les rouleaux correspond à l'entraxe entre ces rouleaux. Par contre, si le vitrage présente un bord oblique formant un angle par rapport à la direction de défilement des feuilles de verre pour les points de ce bord oblique, cette distance croît en proportion inverse du cosinus de cet angle. Avec un bord à 30°, un soutien identique des points du bord supposerait une vitesse de défilement comprise entre 30 et 36 centimètres/seconde donc inadmissible. Le calcul montre ainsi que la vitesse limite de 25 centimètres/seconde est atteinte dès que l'angle est inférieur à 45° ce qui explique l'apparition de défauts de type festonnage des bords. Et il va de soi qu'il n'est pas possible de remédier à ce problème en modifiant la position de la feuille de verre par rapport à cette direction de défilement car cette dernière détermine également la direction principale de la courbure conférée.

L'invention a pour but une modification de la technique de bombage/trempe mentionnée plus haut en vue d'une nouvelle amélioration de la qualité du galbe et de la qualité optique des vitrages produits avec notamment la suppression de l'effet de festonnage des bords dans le cas des vitrages triangulaires ou de toute forme comportant un bord oblique.

Ce problème est résolu selon l'invention par un procédé de bombage de feuilles de verre, préchauffées à température de bombage, consistant à les faire défiler sur un lit de conformation à profil substantiellement circulaire ou substantiellement conique de révolution vu dans la direction longitudinale dudit lit de conformation, ledit lit de conformation étant constitué par un ensemble d'éléments tournants propres à entraîner les feuilles de verre et au moins un coussin d'air chaud agissant sur les feuilles de verre au moins dans la première partie de la zone de bombage.

De la définition précédente, il ressort que la feuille de verre est essentiellement conformée au moyen du coussin d'air chaud. Celui-ci peut agir sur la face inférieure, la face supérieure ou encore sur les deux faces de la feuille de verre.

Avec un coussin d'air chaud agissant uniquement sur la face inférieure, il faut prévoir des moyens supérieures par exemple de type galets propres à maintenir la feuille de verre avec les éléments tournants assurant son entraînement dans la machine de bombage. Pour les raisons indiquées plus haut, ces moyens supérieurs constituent un inconvénient mais néanmoins, le coussin d'air chaud contribue à une plus grande qualité du formage. A noter que ce coussin d'air chaud inférieur peut être en fait constitué par une série de coussins d'air chaud montés dans les espaces interstitiels entre les éléments tournants par exemple du type tiges droites ou tiges contrefléchies.

Le second cas, plus avantageux est celui d'un coussin d'air chaud agissant sur la face supérieure de la feuille de verre. Il permet alors d'accroitre légèrement l'effet de la gravité et de ce fait, améliore la capacité d'entraînement des éléments tournants du lit de conformation. De ce fait, on va pouvoir augmenter la vitesse de défilement du verre sans augmenter les risques de glissement (patinage), permettant ainsi d'optimiser systématiquement la vitesse de défilement des feuilles de verre en fonction du temps susceptible d'être consacré à la trempe thermique. Dans ces conditions, la vitesse de défilement des feuilles de verre va pouvoir atteindre de l'ordre de 25 cm/seconde ce qui est très favorable à sa qualité optique. Par ailleurs, le coussin d'air chaud n'entraîne aucun risque de marquage optique de la face du verre en contact, c'est-à-dire de la face tournée vers le haut généralement émaillée. Par air chaud, on entend de l'air porté à une température relativement voisine de la température de bombage des feuilles de verre ; cet air chaud conduit à un autre effet tout particulièrement avantageux de l'invention à savoir le moindre refroidissement de la feuille de verre pendant la séquence de bombage avec pour conséquence la possibilité de travailler avec un verre légèrement plus froid en sortie de four sans pénaliser la trempe mais en diminuant le risque d'ondulation en raison de la plus grande rigidité de la plaque de verre.

L'accent doit être mis sur le fait qu'avec une machine de bombage à l'ambiante, la vitesse de refroidissement du verre est de l'ordre de 7 à 8°C par seconde, soit plus de 10°C pendant le bombage. Et aux températures considérées, un tel refroidissement conduit à plus que tripler la viscosité ce qui est bien sûr préjudiciable au bombage.

Il importe surtout d'excercer une action sur la feuille de verre au tout début de la zone de bombage, lorsque la feuille de verre est encore en grande partie entraînée par les derniers rouleaux du four de réchauffage, rouleaux qui bien sûr sont disposés dans un plan horizontal de sorte que la feuille de verre présente une certaine rigidité due à sa partie arrière plane. Néanmoins, ne serait-ce que pour profiter au maximum de l'effet thermique de l'air chaud, le coussin d'air chaud supérieur recouvre préférentiellement toute la zone de bombage.

Cette variante de l'invention est tout particulièrement préférée, dans le cas d'ailleurs le plus fréquent où le bombage est suivi d'une trempe thermique par des jets de gaz de refroidissement soufflés sur les deux faces du verre par des buses supérieures et inférieures, intercalées entre les éléments tournants disposés dans la dernière partie du lit de conformation.

Selon un mode de réalisation tout particulièrement avantageux de l'invention, deux coussins d'air chaud agissent de part et d'autre de la feuille de verre. De cette manière, on améliore encore l'effet thermique et surtout on peut apporter un soutien complémentaire pour le verre non supporté par les rouleaux, sans créer de défauts d'entraînement de la feuille de verre qui reste plaquée contre les rouleaux grâce au coussin d'air chaud supérieur. Le coussin d'air chaud inférieur va ainsi créer un certain nombre de points d'appui supplémentaires qui limitent le festonnage des bords. Par ailleurs, la qualité optique est assurée par la vitesse élevée permise par le coussin d'air chaud supérieur. Dans ce mode de réalisation, on peut ainsi considérer que la feuille de verre est conformée entre les coussins d'air chaud, les rouleaux ne servent qu'à son entraînement mécanique, le poids du verre étant pris en charge par les coussins d'air. Subsidiairement ces rouleaux donnent des points de référence précis, la précision mécanique pouvant être apportée lors du positionnement d'un rouleau n'ayant pas d'équivalent simple avec pour un coussin d'air.

Avantageusement, les coussins d'air chaud peuvent présenter une légère courbure transversale, identique à la courbure transversale que l'on souhaite conférer à la feuille de verre.

La présente invention a également pour objet une installation de bombage comportant un lit de conformation formé par un ensemble d'éléments tournants notamment du type rouleaux, disposés selon un profil, substantiellement circulaire ou substantiellement conique de révolution vu selon la direction longitudinale dudit lit de conformation et au moins un moyen pour générer un coussin d'air chaud au-dessus et/ou au-dessous dudit lit de conformation.

Ces moyens pour générer des coussins d'air chaud sont par exemple des séries de corps creux oblongs, éventuellement juxtaposés pour former le coussin d'air supérieur et fermés par une paroi réalisée en une matière poreuse avantageusement susceptible d'être mise en forme par usinage, lesdits corps oblongs étant de préférence emmaillotés dans un tissu en fibres résistant à haute température protégeant la paroi poreuse en cas de bris du vitrage.

Les coussins d'air chaud utilisés selon l'invention doivent présenter une hauteur de vol faible, de préférence comprise entre 0,2 et 2 mm et être relativement durs, c'est-à-dire que le passage de la feuille de verre ne doit pratiquement pas affectée la hauteur du coussin d'air.

D'autres détails et caractéristiques avantageuses de l'invention ressortent ci-après de la description d'un exemple de réalisation faite en référence aux dessins annexés qui représentent :
* **figure 1** : une vue partielle en perspective d'une installation de bombage selon l'invention,
* **figure 2** : une vue de détail de la figure 1.

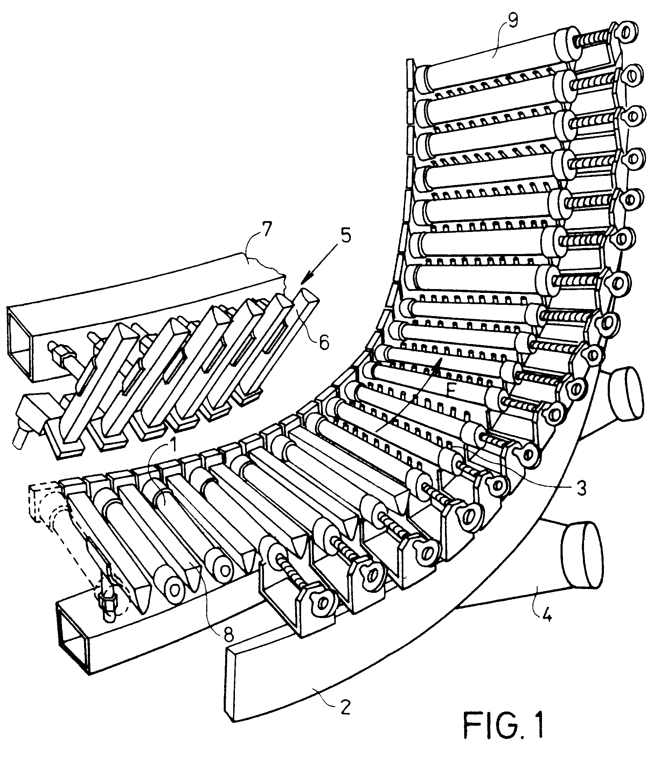

La figure 1 illustre le principe du procédé de bombage selon l'invention appliqué dans le cas présent à une machine de bombage comportant un lit de conformation dont les tiges conformatrices 1, de préférence du type rouleaux cylindriques droits, sont disposées selon un profil circulaire défini par les arceaux 2 dans la direction de défilement des feuilles de verre indiquée par la flèche F. La concavité du lit est tournée vers le haut. La machine de bombage est disposée immédiatement en aval d'un convoyeur plan d'amenée des feuilles de verre chauffées à la température de bombage ; pour éviter les déformations optiques qui résulteraient d'une cassure du chemin suivi par les feuilles de verre, la courbe du lit de conformation est tangente à ce convoyeur d'amenée ici non schématisé. Les rouleaux sont disposés ici parallèlement les uns aux autres pour l'obtention d'un vitrage cylindrique. Ils sont mis en rotation par exemple par un ensemble de chaînes agissant sur des pignons disposés à l'extrémité des rouleaux et entraînés à partir d'un arbre moteur.

Les 7 premiers rouleaux de la machine définissent la zone de formage. Les rouleaux suivants appartiennent à la zone de trempe et entre ceux-ci sont disposées des buses de soufflage 3 alimentées par des caissons de soufflage 4 qui projettent un gaz de refroidissement généralement de l'air, en direction de la face inférieure de la feuille de verre. En regard des buses de soufflages inférieures sont prévues des buses de soufflage supérieures ici non schématisées pour plus de clarté et qui projettent du gaz de refroidissement en direction de la face supérieure de la feuille de verre. Pour permettre une bonne évacuation de l'air de trempe, les rouleaux de la zone de trempe sont plus espacés, de moins en aval de la première partie de cette zone de trempe, donc à partir du moment où le verre a déjà été suffisamment refroidi pour que sa forme soit figée. Par ailleurs, dans cette zone de trempe, à tout rouleau du lit de conformation correspond un rouleau supérieur eux aussi non représentés. Dans cette zone de trempe, il est en effet préférable de ne pas supprimer les rouleaux supérieurs car l'avancée de la feuille de verre est freinée par le soufflage des gaz de refroidissement et de toute façon, le verre y est plus froid donc les rouleaux supérieurs ne peuvent plus avoir d'effets dommageables.

Comme on peut le voir sur cette figure 1, les sept premiers rouleaux de la machine de bombage ne sont pas associés à des rouleaux supérieurs, l'absence de ceux-ci étant, comme indiqué dans le brevet EP-B-263 030, compensée par une vitesse de défilement des feuilles de verre au moins égale à 10 cm/seconde et de préférence comprise entre 15 et 25 cm/seconde permise notamment par le coussin d'air supérieur qui évite le patinage. la vitesse de défilement étant d'autant plus grande que la feuille de verre est mince. Toutefois, lorsque la feuille de verre présente un bord oblique et/ou lorsque le rayon de courbure de la machine de bombage est particulièrement petit, il peut apparaître quelques défauts de galbe qui, selon les auteurs de la présente invention, s'avèrent pouvoir être compensés en augmentant légèrement l'effet de la gravité au moyen du coussin d'air supérieur 5 ici obtenu en juxtaposant une série d'éléments 6 alimentés par un tube commun 7.

A l'approche de la zone de trempe, ce coussin d'air supérieur doit être interrompu pour laisser la place aux rouleaux supérieurs à l'aplomb des rouleaux inférieurs et qui vont aider le verre à pénétrer dans la zone de trempe malgré la force contraire générée par les gaz de refroidissement soufflé en continu. A noter qu'à la limite, seuls un ou deux rouleaux supérieurs sont prévus dans la première partie de la zone de trempe et qui servent de barrière à la pénétration de ces gaz de refroidissement dans la zone de bombage. Il est aussi possible de prévoir des rouleaux supérieurs y compris dans la zone de bombage mais en maintenant alors un coussin d'air entre chacun des rouleaux supérieurs de cette zone. Pour un bombage cylindrique, cette solution n'est pas préférée, toutefois, elle peut s'avérer avantageuse si les rouleaux sont en forme ou si des rouleaux auxiliaires sont prévus notamment en vue de l'obtention de vitrages à coins cassés.

Ce dernier point est tout particulièrement important si, comme dans l'exemple de réalisation montré à la figure 1, il est également prévu des coussins d'air 8 entre les rouleaux inférieurs du lit de conformation. Ces coussins d'air inférieurs ont en effet tendance à soulever la feuille de verre ce qui risquerait de la plaquer contre ces rouleaux supérieurs si une contreforce n'est pas exercée.

Le dernier rouleau 9 du lit de conformation est muni d'un ensemble basculant par exemple comme celui décrit dans le brevet français FR-A-2 549 465 qui délivre les feuilles de verre bombées et trempées sur un convoyeur sensiblement plan qui traverse éventuellement une zone de soufflage pour un refroidissement secondaire.

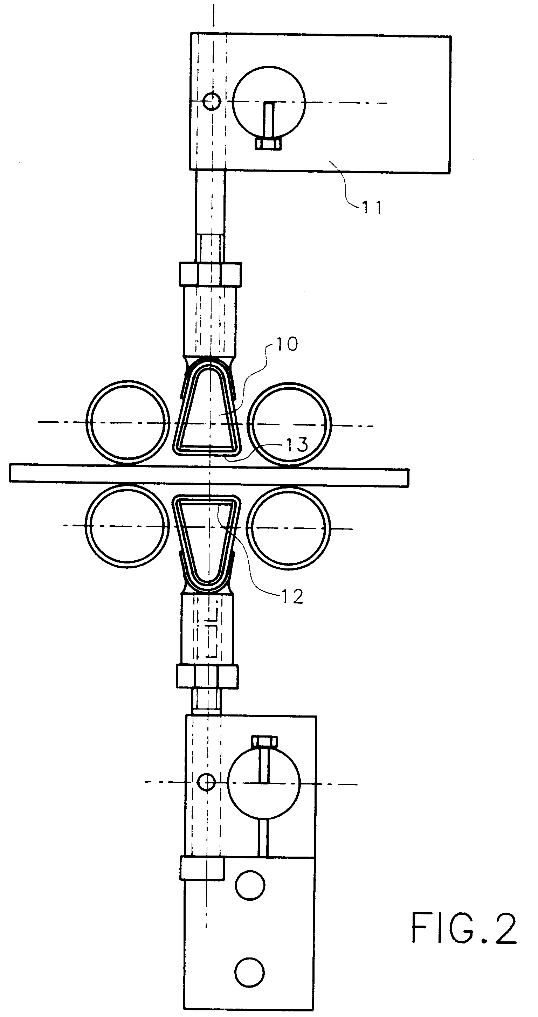

Comme on peut le voir de façon plus détaillée à la figure 2, le ou les différents coussins sont de préférence obtenus à partir d'éléments creux oblongs 10 reliés à un dispositif d'alimentation 11 en air chaud, fermés par une paroi poreuse 12 éventuellement rectifiée par usinage. L'emploi d'un tel matériau permet de réaliser très simplement des coussins d'air adaptés à des lits de conformation non parfaitement cylindriques et présentant par exemple une très légère courbure transversale, lits de conformation dans ce cas, constitués non de tiges cylindriques droites, mais par exemple de rouleaux ventrus ou en forme de diabolos.

Il peut être d'ailleurs noté que dans ce cas, l'invention est tout particulièrement avantageuse car elle permet effectivement l'omission des éléments supérieurs, la suppression de ces derniers n'étant réalisable que dans la mesure où l'entraînement par les rouleaux inférieurs est suffisamment efficace.

Pour éviter d'endommager cette paroi poreuse en cas de bris d'un vitrage pendant la trempe, les éléments oblongs sont de préférence emmaillotés dans une toile protectrice 13, perméable à l'air, faite de fibres résistant à température élevée.

Ces éléments oblongs sont de préférence réalisés de façon standardisée, le coussin d'air supérieur en zone de formage étant simplement obtenu par juxtaposition du nombre voulu d'éléments. Une telle disposition permet de simplifier les problèmes de remplacement des pièces usées.

A titre indicatif, on a par exemple réalisé une machine de bombage avec des éléments oblongs de 15 mm de large (largeur de la paroi formant le coussin d'air) disposés à 5 mm de la feuille de verre, entre des rouleaux droits de 30mm de diamètre, montés avec un entraxe de 50 mm. Dans le cas de coussins d'air inférieurs et supérieurs, cet entraxe peut être encore augmenté sans affecter la qualité des vitrages, les rouleaux servant essentiellement à fixer des points de référence. Les coussins d'air utilisés sont d'une raideur grande, avec un rapport entre la pression d'air dans le caisson et la pression d'air du coussin au moins égale à 4.

## Revendications

1. Procédé de bombage de feuilles de verre, préchauffées à température de bombage, par défilement des feuilles de verre sur un lit de conformation à profil substantiellement circulaire ou substantiellement conique de révolution vu selon la direction longitudinale dudit lit de conformation, ledit lit de conformation étant constitué par un ensemble d'éléments tournants (1) propres à entraîner les feuilles de verre, **caractérisé en ce que** ledit lit est constitué d'au moins un coussin d'air chaud (5, 8) agissant sur les feuilles de verre dans la première partie de la zone de bombage.

2. Procédé de bombage selon la revendication 1, **caractérisé en ce que** le coussin d'air chaud (5, 8) couvre toute la zone de bombage.

3. Procédé de bombage selon la revendication 1 ou 2 comportant en outre une phase de refroidissement des feuilles de verre, notamment en vue de leur trempe thermique, par des jets de gaz soufflés par des buses supérieures et des buses inférieures (3) intercalées entre les éléments tournants disposés dans la dernière partie du lit de conformation.

4. Procédé de bombage selon la revendication 1, 2 ou 3, **caractérisé en ce que** le coussin d'air chaud (8) est disposé sous la feuille de verre et que des moyens supérieurs maintiennent le verre en contact avec lesdits éléments tournants.

5. Procédé de bombage selon la revendication 1, 2 ou 3, **caractérisé en ce que** le coussin d'air chaud (5) est disposé au-dessus de la feuille de verre.

6. Procédé de bombage selon l'une des revendications précédentes, **caractérisé par** un coussin d'air chaud supérieur (5) et coussins d'air chaud inférieur (8) intercalés entre les éléments tournants de la zone de bombage.

7. Installation de bombage de feuilles de verre comportant un lit de conformation formé par un ensemble d'éléments tournants (1) notamment du type rouleaux disposés selon un profil substantiellement circulaire ou substantiellement conique de révolution vu selon la direction longitudinale dudit lit de conformation, **caractérisée en ce qu'**elle comporte au moins un moyen pour générer un coussin d'air (5, 8) au-dessus et/ou au-dessous dudit lit de conformation.

8. Installation de bombage de feuilles de verre selon la revendication 7, **caractérisée en ce que** lesdits moyens pour générer des coussins d'air (5, 8) sont constitués par des corps creux oblongs (10), fermés par une paroi poreuse (12).

9. Installation de bombage de feuilles de verre selon la revendication 8, **caractérisée en ce que** lesdits corps oblongs (10) sont emmaillotés dans un tissu en fibres résistant à haute température.

10. Installation de bombage de feuilles de verre selon la revendication 8 ou 9, **caractérisée en ce que** la distance entre ladite paroi poreuse (12) et la face de la feuille de verre en regard est comprise entre 0,2 et 2 mm.

## Claims

1. Process for bending glass sheets preheated to the bending temperature, by moving the glass sheets onto a shaping bed having a substantially circular or substantially revolution-conical profile seen in the longitudinal direction of said shaping bed, the shaping bed being constituted by an assembly of rotary elements (1) able to displace the glass sheets, characterized in that said bed is constituted by at least one hot air cushion (5, 8) acting on the glass sheets in the first part of the bending zone.

2. Bending process according to claim 1, characterized in that the hot air cushion (5, 8) covers the entire bending zone.

3. Bending process according to claim 1 or 2 also having a glass sheet cooling phase, particularly with a view to the thermal tempering thereof, by gas jets blown by upper nozzles and lower nozzles (3) intercalated between the rotary elements and located in the last part of the shaping bed.

4. Bending process according to claim 1, 2 or 3, characterized in that the hot air cushion (8) is located beneath the glass sheets and that upper means maintain the glass in contact with said rotary elements.

5. Bending process according to claim 1, 2 or 3, characterized in that the hot air cushion (5) is positioned above the glass sheet.

6. Bending process according to any one of the preceding claims, characterized by an upper hot air cushion (5) and lower hot air cushions (8) intercalated between the rotary elements of the bending zone.

7. Installation for bending glass sheets having a shaping bed formed by an assembly of rotary elements (1), particularly of the roller type, arranged in accordance with a substantially circular or substantially revolution-conical profile, seen in the longitudinal direction of said shaping bed, characterized in that it has at least one means for generating an air cushion (5, 8) above and/or below said shaping bed.

8. Installation for bending glass sheets according to claim 7, characterized in that said means for generating the air cushions (5, 8) are constituted by hollow, oblong bodies (10), closed by a porous wall (12).

9. Installation for bending glass sheets according to claim 8, characterized in that said oblong bodies (10) are bound in a high temperature-resistant fibre fabric.

10. Installation for bending glass sheets according to claim 8 or 9, characterized in that the distance between said porous wall (12) and the face of the facing glass sheet is between 0.2 and 2 mm.

## Patentansprüche

1. Verfahren zum Biegen von Glasscheiben, die auf eine Biegetemperatur aufgeheizt sind, durch Vorbeiführen der Glasscheiben an einem Formgebungsbett mit einem im wesentlichen kreisförmigen oder im wesentlichen konischen Führungsprofil, betrachtet in Längsrichtung des Formgebungsbettes, wobei das Formgebungsbett aus einer Anordnung von drehenden Elementen (1) gebildet ist, die in der Lage sind, die Glasscheibe anzutreiben, **dadurch gekennzeichnet, daß** das Bett aus zumindest einem Warmluftkissen (5, 8) gebildet ist, welches im ersten Teil der Biegezone auf die Glasscheiben wirkt.

2. Verfahren zur Verformung nach Anspruch 1, **dadurch gekennzeichnet, daß** das Warmluftkissen (5, 8) die gesamte Verformungszone abdeckt.

3. Verfahren zur Verformung nach Anspruch 1 oder 2, welches darüberhinaus eine Abkühlungsphase der Glasscheiben umfaßt, insbesondere im Hinblick auf ihre thermische Abschreckhärtung, durch Gasblasdüsen, durch obere Gebläse und untere Gebläse (3), die zwischen den drehenden Elementen eingeschoben sind, welche im hinteren Teil des Formgebungsbettes angeordnet sind.

4. Verfahren zur Verformung nach Anspruch 1, 2 oder 3, **dadurch gekennzeichnet, daß** das Warmluftkissen (8) unterhalb der Glasscheibe angeordnet ist und daß obere Einrichtungen das Glas in Kontakt mit den drehenden Elementen halten.

5. Verfahren zur Verformung nach Anspruch 1, 2 oder 3, **dadurch gekennzeichnet, daß** das Warmluftkissen (5) oberhalb der Glasscheibe angeordnet ist.

6. Verfahren zur Verformung nach einem der vorhergehenden Ansprüche, **gekennzeichnet durch** ein oberes Warmluftkissen (5) und untere Warmluftkissen (8) die zwischen die drehenden Elemente der Verformungszone eingeschoben sind.

7. Vorrichtung zur Verformung von Glasscheiben, mit einem Formgebungsbett, welches durch eine Anordnung von drehenden Elementen (1) gebildet ist, insbesondere vom rollenartigen Typ, die gemäß einem im wesentlichen kreisförmigen oder im wesentlichen konischen Führungsprofil angeordnet sind, betrachtet in Längsrichtung des Formgebungsbettes, **dadurch gekennzeichnet, daß** sie zumindest eine Einrichtung zur Erzeugung eines Luftkissens (5, 8) oberhalb und/oder unterhalb des Verformungsbettes umfaßt.

8. Vorrichtung zur Verformung von Glasscheiben nach Anspruch 7, **dadurch gekennzeichnet, daß** die Einrichtungen zur Erzeugung der Luftkissen (5, 8) aus länglichen Hohlkörpern (10) gebildet sind, durch eine poröse Wand (12) verschlossen sind.

9. Vorrichtung zur Verformung von Glasscheiben nach Anspruch 8, **dadurch gekennzeichnet, daß** die länglichen Körper (10) aus einem Stoff gewickelt sind, der aus hochtemperaturfesten Fasern besteht.

10. Vorrichtung zur Verformung von Glasscheiben nach Anspruch 8 oder 9, **dadurch gekennzeichnet, daß** der Abstand zwischen der porösen Wand (12) und der Fläche der gegenüberliegenden Glasscheibe zwischen 0,2 mm und 2 mm liegt.
